# EUROPEAN PATENT SPECIFICATION

(11) **EP 0 894 590 B1**
(45) Date of publication and mention of the grant of the patent: **12.11.2003**
(21) Application number: 98202497.8
(22) Date of filing: 24.07.1998
(51) Int. Cl.: B28B 11/08

(54) **Ageing process for brick**
Verfahren zum künstlichen Altern von Steinen
Procédé de vieillissement pour briques

(30) Priority: 28.07.1997 BE 9700646
(43) Date of publication of application: 03.02.1999
(73) Proprietor: Vandersanden Steenfabrieken N.V., 3740 Bilzen (BE)
(72) Inventor: Vanpee, Camille, B-3650 Dilsen (BE)
(74) Representative: Callewaert, Jean

(56) References cited:
- EP-A- 0 450 433
- AU-A- 513 148
- FR-A- 2 314 157
- GB-A- 508 325
- US-A- 1 463 937
- US-A- 1 805 292
- US-A- 1 840 396
- US-A- 1 859 723
- US-A- 3 754 850
- US-A- 4 495 132
- PATENT ABSTRACTS OF JAPAN vol. 095, no. 011, 26 December 1995 & JP 07 206552 A (I L B KK;OTHERS: 01), 8 August 1995

## Description

The invention concerns a method for manufacturing bricks made of fired clay or mud, more specifically facade bricks, according to which the clay or mud is pre-treated and has added to it ingredients which themselves may or may not be known, after which the pre-treated clay or mud is divided into lumps, which are pressed into moulds in order to obtain blocks of certain dimensions and shape; the blocks thus obtained are dried and then fired to produce the above-mentioned brick. More specifically, the invention concerns a method for producing bricks which have the appearance of old or rustic bricks, such for example as scove bricks.

In the present state of the art, bricks with an old or rustic appearance are made by taking bricks fired by the conventional method and placing them in a rotating drum in order to obtain a roughened surface and round off the corners and edges. The bricks thus treated may then have colouring materials added to them.

This method has the disadvantage that a great deal of energy is required to round off already-fired bricks in a rotating drum, which results in a relatively large number of bricks being damaged or destroyed. Damaged bricks may not actually break until later, after being packaged and transported, resulting in a lower-quality batch of bricks. Another disadvantage is that treating hard, fired bricks causes a great deal of wear on the installations used. Furthermore, the loose bits that come free during rounding of the fired bricks cannot be recycled, and thus have to be considered as waste. Whenever such bricks have to be coloured after treatment in said drum, the adhesion of the colouring material to said bricks is relatively weak.

Patents US 1 859 723, JP 072 066 552 and US 1 840 396 describe a method for treating bricks in which the surface of the bricks is treated with steel brushes, sand-blasted or shot-blasted before firing. These methods have the disadvantage that material on the sides of the bricks is removed in an essentially even manner, whereby any colouring materials or sanding applied to the bricks also disappears. Also, the veining structure which is present is removed virtually altogether. The use of steel brushes, sand blasting or shot blasting is relatively expensive and demands a high consumption of energy.

Patent application AU 513 148 concerns a method for treating lumps of clay to be fired which enables bricks to be obtained that as closely as possible resemble the appearance of hand-made bricks, with a relatively smooth surface and uniformly rounded edges and corners.

The aim of the invention is to overcome these disadvantages and to present bricks with the appearance of old or rustic bricks and to produce them in a way that requires less energy, causes much less wear on the machinery, and gives high quality and good colour-fastness. The method according to the invention also leads to a minimum number of bricks being broken during the manufacturing process.

To that end, said blocks are subjected to a surface treatment after drying as mentioned above and before firing, in such a way that they undergo a change of surface structure and, after firing, take on more specifically the appearance of old or rustic bricks, such for example as scove bricks.

Advantageously, the comers of said blocks are at least partially rounded off during said surface treatment.

In an advantageous manner, between drying and firing, said blocks can be allowed to move freely with respect to each other in a rotating drum, so that among others comers and/or edges of said blocks are at least partially rounded off, and so that the surface of the blocks may possibly be roughened so as to obtain a certain relief.

According to a particular embodiment of the method according to the invention, colouring materials in liquid or powder form are added to said blocks after said surface treatment and before firing.

According to a preferred embodiment of the method according to the invention, the blocks are fired at a temperature such that they show heterogeneous shrinkage which can vary from block to block.

According to a further preferred embodiment of the method according to the invention, a heterogeneous temperature distribution is created during firing, so that said blocks show varying shrinkage and/or colour with respect to each other.

Other features and advantages of the invention will be apparent from the following description of several specific embodiments of the method and installation according to the invention; this description is given by way of example only and does not limit the scope of the protection claimed; the reference figures used below relate to the attached drawings.
Fig. 1 is a schematic block diagram of the different steps of the method according to the invention.
Fig. 2 is a schematic perspective representation of a drum according to a first embodiment of the installation for carrying out the method.
Fig. 3 is a schematic side view of a drum according to a second embodiment of the installation.
Fig. 4 is a schematic perspective representation of a part of a third embodiment of the installation.
Fig. 5 is a schematic perspective representation of a row of blocks after application of the method according to the invention with the help of the installation in fig. 4.
Fig. 6 is a schematic side view of a part of a fourth embodiment of the installation.

In the different drawings, the same reference figures relate to the same or similar elements.

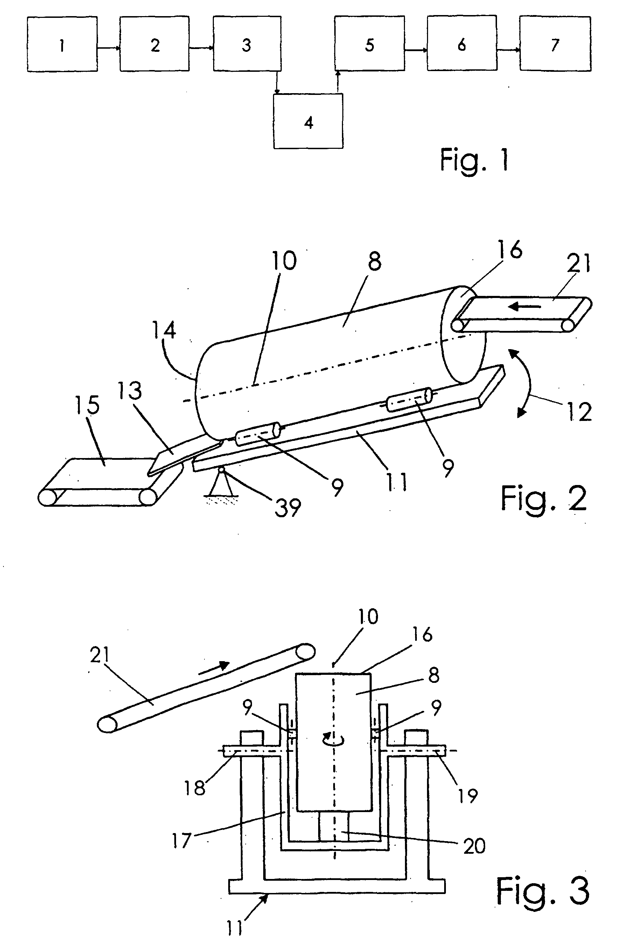

In the method according to the invention, as shown in the drawing in fig. 1, the clay and/or mud is pre-treated in a first step 1 according to a process which in itself is known, in which extra ingredients may possibly be added. In a second step 2 of the method, the pre-treated clay or mud is divided into lumps. The surface of these lumps is coated with sand and possibly also with colouring materials. In contrast to the amount of sand used in the present state of the art, an excessive amount of sand is used here.

These lumps are pressed into conventional brick moulds. Such moulds are used to give the lumps a shape and dimensions that correspond substantially to the final shape of a normal brick. In view of the fact that the lumps of clay or mud have been rolled in an excessive amount of sand, the pressed blocks obtained by pressing said lumps into the mould are relatively irregular and rounded in comparison with those obtained according to the conventional method in which smaller amounts of sand are used.

The carpet of sand in which the lumps are rolled generally has a thickness of 2 cm, while in the conventional method it is of the order of 1 cm. Before said lumps are pressed into the moulds, face sanding is carried out by means of compressed air blowers for a duration of one second instead of the usual duration of 0.3 seconds.

Next, in a third step 3 of the method according to the invention, said blocks are transported to a drying system where practically all moisture is removed from the lumps, so that they have for example a maximum moisture content of 4%. This drying system can for example consist of a drying chamber or drying tunnel.

After drying, the blocks are subjected, in a fourth step 4 of the method according to the invention, to a surface treatment.

In this fourth step 4, at least part of the layer of sand formed as described above is removed from the blocks. In addition, the blocks thus obtained are then subjected to a surface treatment so that the edges and/or corners of the blocks are rounded, and their surfaces are possibly also made at least partially rough. In this step, the dried blocks do not undergo any plastic deformation.

Since the dried blocks have still not been fired and so have rather low solidity, it is easy to carry out the surface treatment with a relatively small consumption of energy and little wear on the machine. A further advantage of applying this treatment before firing is the fact that the sand and clay or mud that come away as loose particles can be recycled without any problem into the clay andlor mud from which the above-mentioned lumps were made. This is in contrast to the existing methods in which waste is produced that consists of already-fired clay or mud which cannot be recycled.

In a first embodiment of the method according to the invention, during the surface treatment the blocks are moved loosely over one another, and so grind over one another. For this purpose the dried blocks are preferably allowed to move freely with respect to each other in a rotating drum. This drum preferably has a hard wall which is provided with projections, and which for example is made of steel. In this way the edges and/or corners of said. blocks are at least partly broken off and/or ground off, and possibly the surface is made rough so that if obtains a certain relief. Furthermore, the characteristic veined structure and the sanding of the blocks is retained, as are the colouring materials applied.

A first embodiment of the installation for applying this method is shown in fig. 2. The installation comprises a drum 8 which rests on bearings 9 and which can rotate about its axis 10. For this purpose the drum 8 is driven by a motor (not shown in the drawing). The bearings 9 are mounted on a chassis 11 which, on one side, has a hinging point 39 and, on the other, can be tilted according to arrow 12, in such a way that the inclination of the drum 8 can be adjusted according to the nature of the blocks to be treated and according to the speed of rotation of the drum 8. The time during which the blocks remain in said drum 8 depends on, among other things, the speed of rotation and the inclination of said drum 8, and on the nature and density of the material of which the blocks are made.

The drum 8 preferably has a diameter of 1 to 1.5 m and rotates at a speed of between 20 and 60 revolutions per minute. The motor power is generally 2.5 to 5.5 kW.

At the lower end of the drum 8 is a slide plate 13 by means of which the blocks leaving the drum 8 via the open end 14 of the latter are guided to a vibrating trough or conveyor belt 15, where the blocks are sorted and the damaged blocks removed. The blocks are then stacked in rows, in order to be fired in the following step 6 according to the invention.

The blocks coming from the drying system are taken into the drum 8 by a conveyor belt 21 at the open end 16.

Furthermore, said drum 8 preferably contains baffles - also not shown, but known in themselves -. which during rotation carry the blocks to a certain height so that said blocks then fall down inside the drum 8, as a result of which the comers and edges of the blocks become rounded through interaction with the inside wall of the drum 8 and with each other. The number of baffles is adjusted according to the dimensions of the blocks, the desired degree of rounding or roughness, the speed of rotation and the inclination of the drum 8.

Since in the method according to the invention the surface treatment is applied to dried blocks, the wall of the drum 8 is much less liable to wear than is the case with blocks that have already been fired.

The wall of the drum 8 is provided with openings - not shown in the drawings - which ensure that loose particles broken off during the surface treatment are continuously removed from the drum 8 through said openings. Such loose particles consist mainly of the sand which is applied to the lumps in step 2 and removed from the blocks, and of particles of clay that come loose from the blocks during the rounding of the corners and edges, and possibly also of colouring materials. Said openings are for example 200 mm by 30 mm in size, with substantially 50 openings per square metre.

During the rotation of the drum 8, in the method according to the invention, colouring materials are added to the blocks via a distribution device that is preferably mounted in said drum, but not shown here. Said colouring materials can be applied in liquid or powder form.

In certain cases, depending on the desired result, said colouring materials may possibly be added before and/or after treatment of the blocks in the drum 8.

Adding the colouring materials before firing ensures that durable adhesion on and in the blocks is obtained.

A second embodiment of the installation for applying this method is shown in fig. 3. This differs from the embodiment shown in fig. 2 in that the drum 8 only has an opening at one end 16, which serves both as the entry and as the exit opening. In addition, said drum 8 is mounted on a supporting frame 17 which is mounted in bearings so that it can rotate on a chassis 11 by means of two shafts 18 and 19 in line with each other.

The drum 8 is supported at the sides by bearings 9 so that said drum can rotate about its axis 10 in the carrying frame 17. At the closed end 14 of the drum 8 is a motor 20 by means of which the drum can be driven. The drum is preferably driven at a speed of 5 to 60 revolutions per minute. The motor 20 can consist of an electric, hydraulic or pneumatic motor whose speed can be regulated. The drum preferably has a diameter of between 1.5 and 2 metres and a length of between 1 and 2 metres.

Said blocks are led into the drum 8 via a conveyor belt 21 when the entrance opening is located at the top, or in other words when said axis 10 is substantially vertical. The drum 8 is then titled around the shafts 18 and 19 to an angle of around 30°. In that position, the blocks are subjected to the surface treatment described above by rotating the drum 8 about its axis 10 and possibly adding colouring material.

To remove the blocks from the drum 8, the latter is tilted further round the shafts 18 and 19 until the blocks, together with the above-mentioned loose particles, fall out of said exit opening at the side 16 of the drum 8. In this way the drum is emptied onto a conveyor belt - not shown in the figure - which leads the blocks and loose particles to a screening device which separates the particles from the blocks.

Said screening device can possibly be incorporated into said conveyor belt, comprising for this purpose parallel transport rollers mounted at a distance from each other in such a way that the blocks are carried over them, while the loose particles fall between said rollers and are thus separated from said blocks.

In a simplified, third embodiment of an installation for applying the method according to the invention, when said dried blocks leave the drying system they are pressed against a plate provided with projections. Said projections penetrate the blocks and so ensure that the material of the blocks comes loose and their surface is made rough and uneven. In this case, the position of said projections with respect to the blocks is preferably chosen in such a way that at least one of said projections coincides with the edges and/or corners of the blocks, so that the latter are rounded off.

More specifically, in this method according to the invention, the blocks are clamped between grippers featuring the aforesaid projections.

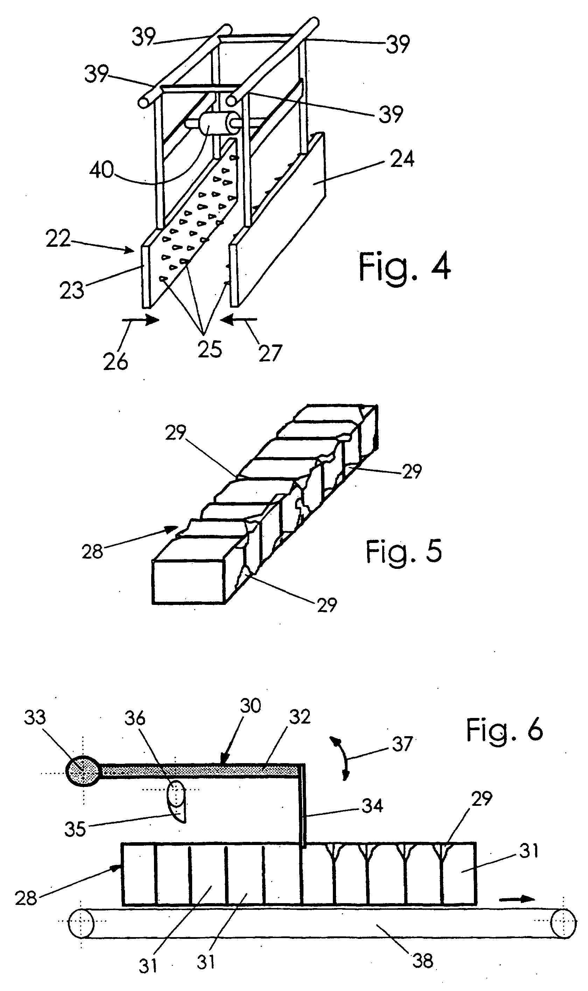

Such a gripper 22 is shown in fig. 4. Said gripper 22 has two parallel plates 23 and 24, each provided with teeth or projections 25. Said plates 23 and 24 are located at a distance from each other such that a row of blocks can be placed between them. In addition, hinge points 39 and a pneumatic or hydraulic piston 40 are provided which enable said plates 23 and 24 to be moved towards each other with an appropriate force in the direction indicated by the arrows 26 and 27, in such a way that the row of blocks is clamped between them and said projections 25 penetrate the blocks.

In this way, a row of blocks clamped in the gripper 22 may possibly be moved by means of the same. Conventional grippers used for this purpose have no such projections 25 but are smooth or lined with plastic, the aim being that, on the contrary, they should not damage the blocks being moved.

A row of blocks 28 is shown schematically in fig. 5 where, as a result of the blocks being pressed against the projections 25 of said gripper 22, material has come loose from the blocks so that their corners and/or edges 29 have been partially rounded, bevelled and/or broken off.

After applying the above-mentioned surface treatment with the help of the grippers 22, colouring material may possibly be added to the blocks.

According to another variant of the methods according to the invention as described above, the surface, edges and/or corners of the. blocks are worked with a hammer 30, as shown in fig. 6. For this purpose, successive blows of the hammer 30 are given on the surface of the edges or corners of the blocks 31, in such a way that said surface becomes uneven and the edges and corners 29 are rounded off.

For this purpose, an installation comprises a hammer 30 which includes a lever 32 which is attached to a hinge 33 about which it can rotate. In addition, the hammer 30 has a peen 34 attached to the lever 32 at the end opposite to the hinge 33. The hammer 30 rests on a cam 35 which rotates about a horizontal shaft 36 mounted between said peen 34 and the hinge 33.

In this way, when the cam 35 rotates, the hammer 30 is subjected to a to-and-fro rotational motion about the hinge 33. The peen 34 is accordingly subjected to an up-and-down movement, as indicated by the arrow 37. During this motion of the peen 34, the row of blocks 28 is moved under said hammer 30 by means of a conveyor belt 38, in such a way that when the peen 34 is at its highest position, said row of blocks can move freely under the hammer 30 stepwise over a distance equal to the thickness of a block or a part of that distance. In this way, the peen 34 falls on at least the adjacent edges of two successive blocks, in such a manner that those edges break off, as is shown clearly in fig. 6. Various hammers 30 can be mounted side by side or one after the other, in order to increase the machine capacity.

After breaking off the edges and comers during the surface treatment in said fourth step 4 of the method according to the invention, in a fifth step 5 the blocks are preferably stacked in layers on kiln trolleys. This stacking can possibly be done using the above-mentioned grippers 22.

During the stacking of the blocks, additives are added between the different layers. Said additives can for example be coal granules or mineral dyes such as CaCO₃, Fe₂O₃, etc. in powder form or in suspension with water. This ensures that after the blocks have been fired, colour variations are obtained which approximate those found in scove bricks.

Next, in a sixth step 6 of the method according to the invention, the blocks stacked in layers are brought into a kiln which itself is known, and fired. In order to approximate as closely as possible the irregularities in colour, shape and dimensions of scove bricks, a temperature is generated in the kiln which produces heterogeneous shrinkage of the blocks. In this way, the dimensions of the bricks produced or the blocks fired can differ from one to another.

This is achieved by among other things creating a heterogeneous temperature distribution in the kiln, for example by operating the burners in the kiln at different settings.

Furthermore, irregular shrinkage of the blocks is achieved by firing them at a higher temperature than for conventional bricks. For example, for blocks made from yellow clay, a temperature of 1090°C is used instead of 1075°C. For red clay, a firing temperature of 1100°C is used instead of 1085°C.

In an advantageous manner, the blocks can be fired in a strongly reducing atmosphere.

After firing the blocks, bricks are obtained which very closely approximate the appearance, colour and dimensions of scove bricks. Moreover the bricks produced in this way have greater strength than scove bricks, or imitation scove bricks produced in the conventional manner.

In the seventh step 7 of the method according to the invention, as shown in fig. 1, the bricks produced are packaged once they have cooled to ambient temperature.

To further illustrate the invention, a specific embodiment of the method according to the invention is described below, said method being carried out by means of the installation shown in figs. 1 and 2.

In this specific embodiment, in a first step 1 a mixture was prepared comprising 80% red-firing clay and 20% yellow-firing clay with a maximum CaCO₃ content of 3%, obtained from the Veldwezelt clay-pits. This clay had a moisture content of 10%. In addition, sand was used with a moisture content of 10% and a grain size of 0.5 to 2 mm, obtained from the Zutendaal quarry. Chalk powder (CaCO₃) with a grain size of 40 µm and Fe₂O₃ with a grain size of 45 µm were added.

The clay was mixed in single-shaft, open mixers, known in themselves, with a diameter of 1.2 m and a length of 6 m. During mixing, ground water was added in quantities such that the moisture content after mixing was around 24%. The time spent in the mixers was twenty minutes.

In a following step 2, the lumps obtained were shaped using an "Aberson" press operating at 30 strokes per minute. The face sanding was set to one minute and the thickness of the sand carpet was 2 cm. Chalk powder was applied to the lumps at a rate of 50 kg per hour and FeOₓ was added at a rate of 15 kg per hour. The dimensions of the mould box were 225 x 70 x 107 mm.

The blocks thus. produced were then dried in a third step 3 for 48 hours. The drying chamber settings were as follows: 24 hours at 65°C, relative humidity 90%; 12 hours at 75°C, relative humidity 50%; 6 hours at 80°, relative humidity 20%; 6 hours at 95°C, relative humidity 5%. After the drying process the blocks were left with a residual moisture content of 2%.

The blocks measuring 212 x 66 x 102 mm were then removed from the drying plates with an automatic pusher at a rate of 5,000 blocks per hour, and carried by a 12 metre long, 400 mm wide conveyor belt at a speed of 20 m per minute up a gradient of 20°, towards the drum in which the so-called "ageing" process according to the invention took place.

The drum in question was 1 m in diameter and 4 m in length, while the reduction motor drive had a power of 1.5 kW. The speed of rotation of the drum was 15 revolutions per minute, with the drum set at an inclination of 15°. In addition the drum contained three baffles, each in the form of a metal plate measuring 30 x 10 x 4000 mm. The wall of the drum had openings measuring 200 x 10 mm, spread out at a rate of 50 openings per m².

The blocks remained in the drum for 30 seconds.

Colouring material was added to the blocks in the drum. For this purpose a supply system was provided consisting of a storage drum of 200 litres, a diaphragm valve and a worm pump of 0.75 kW and a rotation speed of 125 to 325 rpm, giving a flow rate of 500 to 1,100 litres per hour. The maximum pressure was 4 bar. This supply system also comprised three injectors in the drum with a bore diameter of 2 mm.

The colouring material used consisted of a suspension of 100 g CaCO₃ powder per litre of water, added at a rate of 100 litres per hour.

After treatment in the drum, the blocks were carried off along a 600 mm wide flat conveyor belt travelling at a speed of 5 metres per minute.

In the fifth step 5, the blocks were stacked on tunnel kiln trolleys. This was done manually in stacks of 125 blocks of 1 metre long and 10 layers high. The separation distance between the stacks was 300 mm. Granules of coal were scattered between the different layers, using 50 kg of coal granules per 10,000 blocks. This was done on half of the layers and on half of the stacks.

Next, in the sixth step 6, the blocks thus stacked were fired in a tunnel kiln set for 115 tonnes per 24 hours, with a firing temperature of 1,100°C, 12 hours top fire and a dwell time in the kiln of 90 hours. The burner air pressure in the kiln was 15 mbar. Half of the burner tubes had a flow rate of 3 m³ per hour, the other half a rate of 1.5 m³ per hour.

In a last step 7, the bricks obtained were palletised with 500 bricks per pallet. This was preferably done using an automatic unloading machine.

The invention is of course not limited to the embodiments described above and shown in the accompanying drawings. For example, other methods can be used for forming the blocks (step 2), such as the well-known extrusion presses or machine mould presses instead of the classic hand mould press. Also for example, other surface treatments can be carried out between the drying and the firing of the blocks, such for instance as rounding off the blocks on a vibrating plate, with the blocks bumping and grinding against one another. The blocks can also for example be treated with vibrating needles. Various types of devices - known or otherwise - can be used for carrying out the above-mentioned steps.

## Claims

1. Method for producing bricks made of fired clay or mud, more specifically façade bricks, according to which clay or mud is pre-treated and ingredients which themselves may or may not be known are added to it, after which the pre-treated clay or mud is divided into lumps, which are pressed in moulds in order to obtain blocks (31) of certain dimensions and shape, and the blocks (31) thus obtained are dried and then fired to obtain said brick, **characterized in that** said blocks (31) are coated with an excessive amount of sand and between the above-mentioned drying, during which practically all moisture to a maximum moisture content of 4% is removed and firing, said blocks (31) are subjected to a surface treatment, in such a manner that they undergo a change of surface structure, without undergoing any plastic deformation, by breaking off and/or grounding off edges and/or corners (29) of said blocks (31), and, after firing, take on more specifically the appearance of old or rustic bricks, such for example as scove bricks.

2. Method according to claim 1, **characterized in that** in the above-mentioned surface treatment the corners (29) of said blocks (31) are at least partially rounded off.

3. Method according to claim 1 or 2, **characterized in that** between drying and firing, said blocks (31) are moved loosely over one another with a grinding effect.

4. Method according to one of claims 1 to 3, **characterized in that** between drying and firing, said blocks (31) are pressed against a plate with projections (25), so that said projections (25) penetrate said blocks, and that material is removed from the surface and/or corners (29) of said blocks (31).

5. Method according to claim 4, **characterized in that** said blocks (31) are clamped between grippers (22) provided with said projections (25).

6. Method according to one of claims 1 to 5, **characterized in that** between drying and firing, said blocks (31) are allowed to move freely with respect to each other in a rotating drum (8) so that among other things the corners and/or edges (29) of said blocks (31) are at least partially broken off, and the surface of the blocks (31) is possibly roughened so as to obtain a certain relief.

7. Method according to one of claims 1 to 6, **characterized in that** the surface of said blocks (31) is treated with hammers (30) in such a way that the edges and/or comers (29) of the blocks (31) are broken and/or rounded off and a random relief is created on the surface of the blocks(31).

8. Method according to one of claims 1 to 7, **characterized in that** during or after said surface treatment and before firing, colouring materials in liquid or powder form are applied to said blocks (31).

9. Method according to one of claims 1 to 8, **characterized in that** after the surface treatment, when the blocks (31) are stacked in layers for firing, additives such as colouring materials or coal granules are added between said blocks (31) or said layers, in order to obtain, after firing, certain colour shades which for example approximate those of scove bricks.

10. Method according to one of claims 1 to 9, **characterized in that** the blocks (31) are fired at a temperature such that they show a heterogeneous shrinkage which can vary from block to block.

11. Method according to claim 10, **characterized in that** said temperature, for blocks (31) consisting essentially of red and/or yellow clay, is essentially between 1075°C and 1100°C, more specifically around 1090°C for yellow clay and 1100°C for red clay.

12. Method according to one of claims 1 to 11, **characterized in that** during firing, the temperature is heterogeneously distributed, imparting to said blocks (31) a shrinkage and/or colour that differs from one block to another.

13. Method according to one of claims 1 to 12, **characterized in that** the loose particles obtained in the surface treatment are recycled into the clay and/or mud from which said blocks (31) are made.

## Patentansprüche

1. Verfahren zum Herstellen von aus gebranntem Ton oder Schlick bestehenden Ziegeln, insbesondere von Fassadenziegeln, gemäß welchem der Ton oder Schlick vorbehandelt wird, und Zutaten, welche selbst bekannt oder nicht bekannt sein können, diesem zugesetzt werden, wonach der vorbehandelte Ton oder Schlick in Klumpen unterteilt wird, welche in Formen gepreßt werden, um Blöcke (31) bestimmter Abmessungen und Form zu erhalten, und die so erhaltenen Blöcke (31) getrocknet und dann gebrannt werden, um den Ziegel zu erhalten, **dadurch gekennzeichnet, daß** die Blöcke (31) mit einer Überschußmenge an Sand beschichtet werden und die Blöcke (31) zwischen der vorstehend erwähnten Trocknung, während welcher praktisch die gesamte Feuchtigkeit bis auf einen maximalen Feuchtigkeitsanteil von 4% entfernt wird, und dem Brennen einer Oberflächenbehandlung in einer Weise unterworfen werden, daß sie eine Veränderung der Oberflächenstruktur erfahren, ohne irgendeine plastische Verformung zu erfahren, indem Kanten und/oder Ecken (29) der Blöcke (31) abgebrochen und/oder abgeschliffen werden, und nach dem Brennen, insbesondere das Aussehen von alten oder rustikalen Ziegeln, wie z.B. Brandziegeln annehmen.

2. Verfahren nach Anspruch 1, **dadurch gekennzeichnet, daß** in der vorstehend erwähnten Oberflächenbehandlung die Ecken (29) der Blöcke (31) wenigstens teilweise abgerundet werden.

3. Verfahren nach Anspruch 1 oder 2, **dadurch gekennzeichnet, daß** zwischen dem Trocknen und Brennen die Blöcke (31) lose gegeneinander mit einem Schleifeffekt bewegt werden.

4. Verfahren nach einem der Ansprüche 1 bis 3, **dadurch gekennzeichnet, daß** zwischen dem Trocknen und Brennen die Blöcke (31) gegen eine Platte mit VorSprüngen (25) so gedrückt werden, daß die Vorsprünge (25) die Blöcke durchdringen und daß Material von der Oberfläche und/oder Ecken (29) der Blöcke (31) entfernt wird.

5. Verfahren nach Anspruch 4, **dadurch gekennzeichnet, daß** die Blöcke (31) zwischen Greifelemente (22), welche mit Vorsprüngen (25) versehen sind, geklemmt werden.

6. Verfahren nach einem der Ansprüche 1 bis 3, **dadurch gekennzeichnet, daß** zwischen dem Trocknen und Brennen die Blöcke (31) sich frei im Bezug zueinander in einer rotierenden Trommel (8) bewegt können, so daß unter anderem die Ecken und/oder Kanten (29) der Blöcke (31) wenigstens teilweise abgebrochen werden, und die Oberfläche der Blöcke (31) möglicherweise aufgerauht wird, um so ein gewisses Relief zu erhalten.

7. Verfahren nach einem der Ansprüche 1 bis 6, **dadurch gekennzeichnet, daß** die Oberfläche der Blöcke (31) mit Hämmem (30) in einer solchen Weise behandelt wird, daß die Ecken und/oder Kanten (29) der Blöcke (31) gebrochen und/oder abgerundet werden und ein zufälliges Relief auf der Oberfläche der Blöcke (31) erzeugt wird.

8. Verfahren nach einem der Ansprüche 1 bis 7, **dadurch gekennzeichnet, daß** während oder nach der Oberflächenbehandlung und vor dem Brennen färbende Materialien in flüssiger oder Pulverform auf die Blöcke (31) aufgebracht werden.

9. Verfahren nach einem der Ansprüche 1 bis 8, **dadurch gekennzeichnet, daß** nach der Oberflächenbehandlung, wenn die Blöcke (31) in Schichten zum Brennen gestapelt werden, Zusätze, wie z.B. färbende Materialien oder Kohlekömchen zwischen den Blöcken (31) oder den Schichten hinzugefügt werden, um nach dem Brennen bestimmte Farbschattierungen zu erzielen, welche beispielsweise diejenigen von Brandziegeln annähern.

10. Verfahren nach einem der Ansprüche 1 bis 9, **dadurch gekennzeichnet, daß** die Blöcke (31) bei einer Temperatur so gebrannt werden, daß die eine heterogene Schrumpfung zeigen, welche von Block zu Block variieren kann.

11. Verfahren nach Anspruch 10, **dadurch gekennzeichnet, daß** die Temperatur für Blöcke (31), welche im wesentlichen aus roten oder gelben Ton bestehen, im wesentlichen zwischen 1075 und 1100°C liegt, insbesondere zwischen 1090°C für gelben Ton und 1100°C für roten Ton.

12. Verfahren nach einem der Ansprüche 1 bis 11, **dadurch gekennzeichnet, daß** während des Brennens die Temperatur heterogen verteilt wird, was den Blöcken (31) eine Schrumpfung und/oder Farbe verleiht, welche sich von einem Block zum nächsten unterscheiden.

13. Verfahren nach einem der Ansprüche 1 bis 12, **dadurch gekennzeichnet, daß** die in der Oberflächenbehandlung erhaltenen losen Partikel in den Ton und/oder Schlick, aus welchem die Blöcke (31) hergestellt werden, wieder eingebracht wird.

## Revendications

1. Procédé de fabrication de briques constituées d'argile ou de boue cuite, plus spécifiquement de briques de façade, selon lequel l'argile ou la boue est pré-traitée et dans lequel des ingrédients, qui peuvent eux-mêmes être connus ou inconnus, sont ajoutés à l'argile ou à la boue, l'argile ou la boue étant ensuite divisée en mottes qui sont pressées dans des moules en vue d'obtenir des blocs (31) présentant une certaine taille et une certaine forme, les blocs (31) ainsi obtenus étant séchés et ensuite cuits pour former ladite brique, **caractérisé en ce que** lesdits blocs (31) sont revêtus d'une quantité excessive de sable, et **en ce que**, entre le séchage précité, durant lequel pratiquement la totalité de l'humidité jusqu'à une teneur maximale en humidité égale à 4 % est éliminée, et la cuisson, lesdits blocs (31) sont soumis à un traitement de surface d'une manière telle qu'ils subissent une changement de structure de surface, sans provoquer aucune déformation plastique, en cassant et/ou en meulant les bords et/ou les coins (29) desdits blocs (31), et, après la cuisson, ils adoptent plus spécifiquement l'apparence de briques anciennes ou rustiques, comme par exemple des briques de campagne.

2. Procédé suivant la revendication 1, **caractérisé en ce que**, dans le traitement de surface mentionné ci-dessus, les coins (29) desdits blocs (31) sont au moins en partie arrondis.

3. Procédé suivant la revendication 1 ou 2, **caractérisé en ce que**, entre le séchage et la cuisson, lesdits blocs (31) sont déplacés librement les uns sur les autres avec un effet d'abrasion.

4. Procédé suivant l'une quelconque des revendications 1 à 3, **caractérisé en ce que**, entre le séchage et la cuisson, lesdits blocs (31) sont pressés contre une plaque pourvue de saillies (25), de telle sorte que lesdites saillies (25) pénètrent dans lesdits blocs, et que de la matière soit enlevée de la surface et/ou des coins (29) desdits blocs (31).

5. Procédé suivant la revendication 4, **caractérisé en ce que** lesdits blocs (31) sont serrés entre des pinces (22) pourvues desdites saillies (25).

6. Procédé suivant l'une quelconque des revendications 1 à 5, **caractérisé en ce que**, entre le séchage et la cuisson, lesdits blocs (31) sont autorisés à se déplacer librement les uns par rapport aux autres dans un tambour rotatif (8), de telle sorte que, entre autres choses, les coins et/ou les bords (29) desdits blocs (31) soient au moins partiellement cassés, et que la surface des blocs (31) soit éventuellement rendue rugueuse de manière à présenter un certain relief.

7. Procédé suivant l'une quelconque des revendications 1 à 6, **caractérisé en ce que** la surface desdits blocs (31) est traitée à l'aide de marteaux (30) d'une manière telle que les bords et/ou les coins (29) des blocs (31) soient cassés et/ou arrondis et qu'un relief aléatoire soit créé à la surface des blocs (31).

8. Procédé suivant l'une quelconque des revendications 1 à 7, **caractérisé en ce que**, pendant ou après ledit traitement de surface et avant la cuisson, des matières colorantes sous forme de liquide ou de poudre sont appliquées sur lesdits blocs (31).

9. Procédé suivant l'une quelconque des revendications 1 à 8, **caractérisé en ce que**, après le traitement de surface, lorsque les blocs (31) sont empilés en couches pour la cuisson, des additifs tels que des matières colorantes ou des granules de charbon sont ajoutés entre lesdits blocs (31) ou lesdites couches, en vue d'obtenir, après la cuisson, certaines nuances de couleur qui s'approchent par exemple de celles des briques de campagne.

10. Procédé suivant l'une quelconque des revendications 1 à 9, **caractérisé en ce que** les blocs (31) sont cuits à une température telle qu'ils présentent un rétrécissement hétérogène pouvant varier d'un bloc à l'autre.

11. Procédé suivant la revendication 10, **caractérisé en ce que** ladite température, pour des blocs (31) constitués principalement d'argile rouge et/ou jaune, est essentiellement comprise entre 1075°C et 1100°C, et est plus spécifiquement égale à environ 1090°C pour l'argile jaune et 1100°C pour l'argile rouge.

12. Procédé suivant l'une quelconque des revendications 1 à 11, **caractérisé en ce que**, durant la cuisson, la température est distribuée d'une façon hétérogène, conférant auxdits blocs (31) un rétrécissement et/ou une coloration qui diffère d'un bloc à l'autre.

13. Procédé suivant l'une quelconque des revendications 1 à 12, **caractérisé en ce que** les particules libres formées durant le traitement de surface sont recyclées dans l'argile et/ou la boue dont lesdits blocs (31) sont constitués.
